# FASCICULE DE BREVET EUROPEEN

(11) **EP 3 599 809 B1**
(45) Date de publication et mention de la délivrance du brevet: **08.09.2021**
(21) Numéro de dépôt: 18712215.5
(22) Date de dépôt: 22.03.2018
(51) Int. Cl.: A01B 59/042, A01B 59/06

(54) **DISPOSITIF D'ATTELAGE POUR ENGIN AGRICOLE**
ANHÄNGEVORRICHTUNG FÜR LANDWIRTSCHAFTLICHES FAHRZEUG
HITCH DEVICE FOR AGRICULTURAL VEHICLE

(30) Priorité: 24.03.2017 FR 1752449
(43) Date de publication de la demande: 05.02.2020
(73) Titulaire: Defrancq, Hubert, 02190 Guignicourt (FR)
(72) Inventeur: Defrancq, Hubert, 02190 Guignicourt (FR)
(74) Mandataire: IPAZ
(86) Numéro de dépôt international: PCT/EP2018/057294
(87) Numéro de publication internationale: WO 2018/172458

(56) Documents cités:
- EP-A2- 2 283 719
- NL-C2- 1 020 444
- US-A- 5 931 234

## Description

La présente invention se rapporte au domaine des engins techniques et concerne en particulier un dispositif d'attelage et de relevage d'outil agricole, propre à être monté sur un engin agricole, et plus particulièrement à l'arrière de l'engin.

La présente invention se rapporte plus particulièrement au réglage latéral de la position des outils agricoles tractés par un engin apte à faire varier latéralement la position de l'outil en réponse à un signal de géolocalisation de manière à maintenir de façon fiable un trajet présélectionné.

L'agriculture s'est développée dans le sens de la précision grâce à l'avènement des systèmes de navigation par satellite tel que les GPS. En utilisant un équipement GPS, un agriculteur peut ainsi localiser une position précise dans un champ, ce qui permet de cartographier avec précision les étendues exploitées, selon un grand nombre de paramètres tels que le rendement des cultures, la topographie, la teneur en matière organique, le niveau d'humidité, le taux d'azote, le pH et autres. Les fabricants d'équipements de précision ont commencé à fournir des systèmes de direction automatisés qui utilisent les signaux GPS pour diriger un engin agricole et notamment un tracteur, sur un trajet prédéterminé. Bien que de tels équipements fonctionnent bien pour guider de manière fiable et précise l'engin agricole, les variations de sols et de topographie limitent le positionnement fiable et précis des outils tractés.

Plusieurs solutions pour contrôler la géolocalisation d'un outil agricole attelé à un tracteur ont été envisagées.

De telles solutions sont reliées à la barre de traction du tracteur ou aux deux points inférieurs de l'attelage arrière. Ces solutions consistent en une liaison fixe au tracteur moyennant une barre de traction ou bien deux ou trois points de fixation, et une interface pour déplacer l'outil transversalement, en fonction du signal de géolocalisation, pour que l'outil suive la même direction que le tracteur.

Selon une première approche, l'interface de déplacement de l'outil fait tourner ce dernier autour d'un axe vertical. Pour travailler, l'attelage arrière du tracteur doit avoir une capacité de balancier libre. L'outil doit être équipé d'un dispositif engagé dans le sol (essentiellement au moins un disque) qui génère une force latérale pour déplacer l'outil dans la direction souhaitée. Ce système de correction est toutefois sensible à la typologie du sol et à la déclivité du terrain.

Selon une seconde approche, l'interface de déplacement de l'outil fait translater latéralement ce dernier. Pour travailler, l'attelage arrière du tracteur doit être verrouillé, sans balancier possible. Toutefois, ce type de solutions n'est pas compatible avec des outils profondément engagés dans le sol.

Une solution a alors été d'équiper l'interface, d'ancrages, contre lesquels une réaction de déplacement est appliquée pour déplacer l'unité de travail vers le côté, tandis que l'attelage arrière du tracteur a une capacité de balancier libre. Ces aménagements ne sont toutefois applicables qu'aux outils à faible traction et à faible ancrage dans le sol.

Une autre solution décrite dans le document WO2016041547A1 propose de modifier l'attelage en faisant varier la longueur des bras au moyen d'un vérin afin de permettre la rotation de l'interface en plus de la translation de l'outil. Toutefois, cette solution impose la modification des attelages standards et induit un contrôle complexe des mouvements concomitants de l'attelage et de l'interface.

Une autre solution décrite dans le document EP 2 283 719 concerne un ensemble pour la fixation latéralement réglable d'un outil agricole sur un véhicule. Il comporte un premier élément, compatible avec un attelage trois points d'un engin agricole, un second élément, qui est monté mobile par rapport au premier élément dans la direction horizontale et transversale par rapport à la direction avant. Le second élément comprend un rail inférieur s'étendant horizontalement et transversalement par rapport à la direction avant, auquel un ou plusieurs points d'accouplement de liaison inférieure sont adjoints. Toutefois, le système de fixation n'est pas apte à pivoter librement autour d'un axe vertical, par rapport au second élément.

En résumé, il existe des systèmes de guidage consistant à déplacer latéralement l'engin agricole pour que l'outil suive la trajectoire souhaitée malgré ses décalages par rapport à l'engin. Toutefois, ces systèmes ne sont pas adaptés aux instabilités latérales qui interviennent si rapidement que l'engin n'a pas le temps de compenser latéralement, compte tenu de sa direction de déplacement.

Cest pourquoi, il s'est avéré nécessaire de développer une solution qui puisse s'adapter aux standards des engins agricoles sans qu'il soit nécessaire d'apporter de modification. Il est apparu nécessaire également que cette solution soit compatible avec les outils à ancrage dans le sol.

Le principe est de déplacer latéralement l'outil agricole par rapport à l'engin agricole pour compenser le déport du point de convergence pour que l'outil reste positionné par rapport à sa trajectoire souhaitée, et ce, en dépit des asymétries de sol et du relief.

Ainsi, l'invention a pour objet de déplacer latéralement l'attelage, ce que l'engin agricole ne peut pas faire, tout en gardant la souplesse d'une liaison permettant l'auto-alignement de l'attelage.

Plus précisément l'invention a pour objet un dispositif d'attelage d'un outil, propre à être monté sur un engin agricole, caractérisé en ce qu'il comprend :
- un premier châssis s'étendant suivant un plan vertical, dont la normale est sensiblement la direction de progression de l'attelage,
- un second châssis s'étendant également suivant le plan vertical et monté en translation sur le premier châssis suivant la direction transversale définie par rapport à la direction de progression de l'attelage,
- des moyens d'actionnement (82, 82a, 82b) de la translation du second châssis par rapport au premier châssis,
- un dispositif de fixation du premier châssis à l'arrière de l'engin agricole,
- un système pour accrocher un outil agricole au second châssis, ledit système étant apte à pivoter librement autour de l'axe vertical, par rapport au second châssis.

Le dispositif d'accroche peut comprendre deux accroches disposées au niveau de la partie inférieure du second châssis, symétriquement par rapport à un plan médian, lesdites accroches s'étendant selon le sens opposé à la direction de progression de l'attelage.

Les accroches situées au niveau de la partie inférieure du second châssis peuvent être également pivotantes autour d'un axe du second châssis s'étendant transversalement, et retenues aux moyens de chandelles.

L'angle alpha de pivotement des deux accroches autour de l'axe vertical peut être compris entre 0 et +/- 30°, et préférentiellement entre 0 et +/- 8°.

Le pivotement des accroches autour de l'axe vertical peut être contrôlé par au moins un vérin, ledit au moins vérin étant apte à travailler selon un premier mode correspondant à la libre rotation des accroches autour de la verticale et un second mode dans lequel la rotation des accroches autour de la verticale est verrouillée.

Le dispositif d'accroche peut comprendre en outre une troisième accroche située au niveau de la partie supérieure du second châssis, ladite accroche constituant un élément de retenue de l'outil agricole.

Le dispositif de fixation du premier châssis à l'arrière de l'engin agricole peut être un système de relevage à trois points comportant en partie basse, deux bras articulés et montés en l'une de leurs extrémités sur un axe de l'engin agricole et en l'autre de leurs extrémités sur le premier châssis, et en partie haute un élément de liaison entre la partie supérieure du premier châssis et l'engin agricole, les bras étant commandés par des moyens de relevage.

Le second châssis peut comporter deux bras s'étendant verticalement et reliés en leur extrémité supérieure par un corps, leur extrémité inférieure étant chacune montée coulissante le long d'une paire d'axes coaxiaux ménagée sur le premier châssis et s'étendant dans le plan vertical suivant la direction transversale, tandis que le corps du second châssis est prolongé par un élément de retenue monté coulissant le long d'un axe ménagé sur le premier châssis et s'étendant également dans le plan vertical suivant la direction transversale.

Le second châssis peut comporter deux bras s'étendant verticalement et reliés en leur milieu par un corps, leurs extrémités inférieure et supérieure étant respectivement chacune montées coulissantes le long d'une paire d'axes coaxiaux ménagée sur le premier châssis et s'étendant dans le plan vertical suivant la direction transversale.

Les moyens d'actionnement de la translation du second châssis par rapport au premier châssis peuvent comprendre deux vérins à simple effet montés de part et d'autre du corps du second châssis.

Les moyens d'actionnement de la translation du second châssis par rapport au premier châssis peuvent comprendre un vérin à double effet monté d'un côté du second châssis.

L'espace libre entre les deux bras du second châssis peut définir un passage pour les câbles d'alimentation des moyens d'actionnement de la translation du second châssis par rapport au premier châssis, ainsi que pour la ligne de transmission entrainant l'outil agricole.

Le dispositif d'attelage peut comprendre en outre un capteur pour identifier la position du second châssis par rapport au premier châssis.

D'autres avantages et particularités de l'invention apparaîtront à la lecture de la description détaillée de mises en œuvre et de modes de réalisation nullement limitatifs, et des dessins annexés suivants :
- la figure 1 une vue d'un ensemble comprenant un dispositif d'attelage selon l'invention fixé sur un engin agricole.
- la figure 2 est une vue de trois quart, côté arrière d'un premier mode de réalisation.
- la figure 3 est une vue de trois quart côté avant du premier mode de réalisation d'un dispositif d'attelage selon l'invention.
- la figure 4 est une vue de face, côté arrière d'un second mode de réalisation.
- la figure 5 est une vue de trois quart, côté arrière du second mode de réalisation.
- la figure 6 est une vue est une vue de dessus d'un dispositif d'attelage selon l'invention.
- les figures 7A, 7B, 8A, 8B sont des vues d'un détail d'un perfectionnement de l'invention.

Conformément au principe de l'invention, le dispositif pour atteler un outil agricole à un engin du type tracteur comprend :
- un premier châssis 6 s'étendant dans le plan vertical et dont la normale (appelée aussi perpendiculaire) est sensiblement la direction de progression de l'attelage,
- un second châssis 8 s'étendant également suivant le plan vertical et monté en translation sur le premier châssis suivant la direction transversale (c'est-à-dire latéralement) par rapport à la direction de progression de l'attelage,
- des moyens d'actionnement 82, 82a, 82b de la translation du second châssis par rapport au premier châssis,
- un dispositif de fixation du premier châssis à l'arrière de l'engin agricole,
- un système pour accrocher un outil agricole, ledit système autorisant un pivotement dudit outil autour de la verticale.

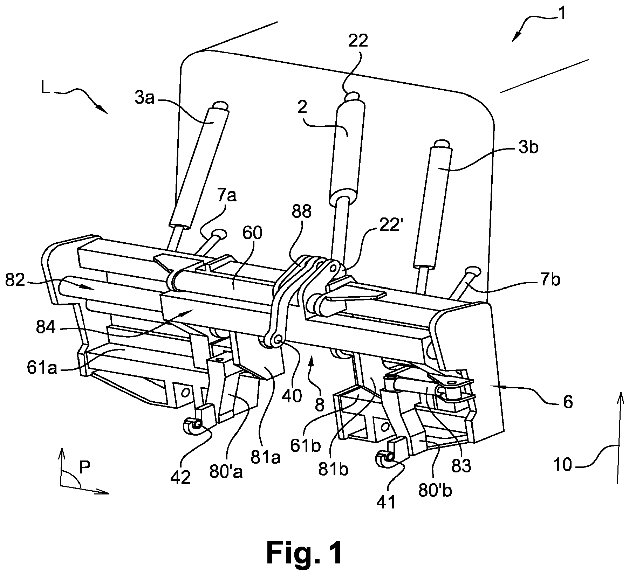

La figure 1 représente un dispositif d'attelage monté sur un engin agricole 1. Il comprend un premier châssis 6 de forme sensiblement plane et s'étendant suivant un plan P vertical comprenant l'axe vertical 10, appelé également « la verticale ». Le plan vertical P correspond au plan dont la normale est la direction de progression de l'attelage. En d'autres termes, cette direction est perpendiculaire au plan P et correspond à la direction d'avancée du tracteur. Le dispositif d'attelage comprend également un second châssis 8 qui s'étend également suivant le plan P vertical. Le second châssis est monté en translation sur le premier châssis suivant une direction transversale (c'est-à-dire latéralement) par rapport à la direction de progression de l'attelage.

Le dispositif d'attelage comprend un dispositif de fixation du premier châssis 6 à l'arrière de l'engin agricole. Ce dispositif de fixation ne permet pas de mouvement latéral de balancier de la part de l'attelage par rapport à l'engin agricole.

Tel que représenté en figure 1, le dispositif de fixation du premier châssis à l'arrière de l'engin agricole est un système de relevage L reliant le premier châssis à l'engin agricole et permettant d'élever le premier et le second châssis, et par conséquent l'outil agricole, par rapport à l'engin.

Le système de relevage peut être avantageusement un système à trois points comportant en partie basse, deux bras 7a, 7b articulés et montés en l'une de leurs extrémités sur un axe de l'engin agricole et en l'autre de leurs extrémités sur le premier châssis 6.

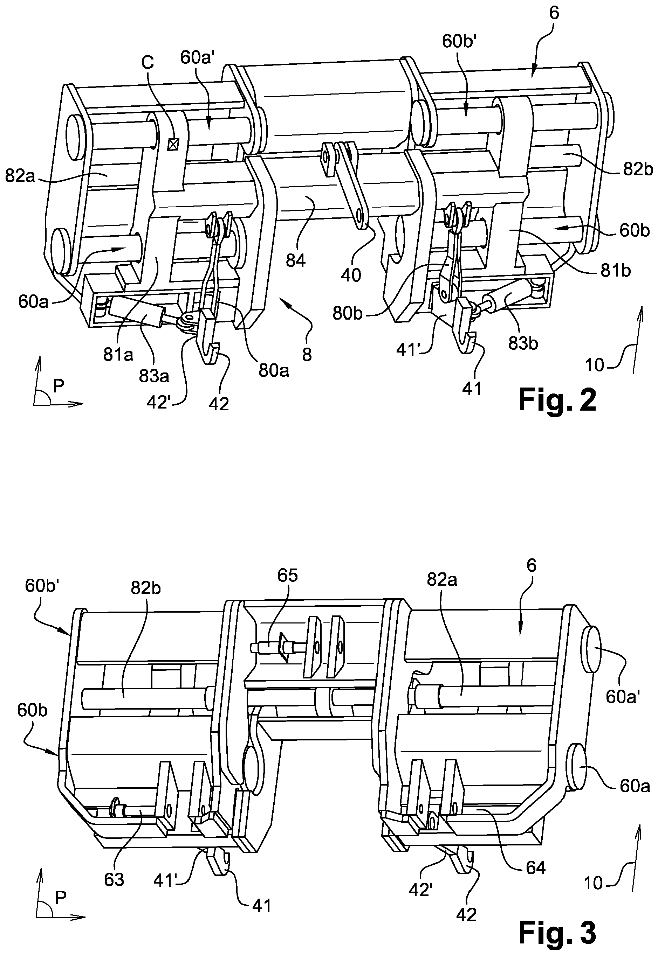

La figure 3 montre par exemple deux axes 63, 64 du premier châssis 6 situés en partie basse, sur lesquels peuvent être montées les extrémités des bras articulés inférieurs 7a, 7b.

De même, en partie haute, le système de relevage comprend un élément de liaison entre la partie supérieure du premier châssis 6 et l'engin agricole. Cet élément de liaison peut consister en un autre bras 2 fixé en l'une de ses extrémités en un point d'articulation 22 sur l'engin agricole et en l'autre de ses extrémités sur un point d'articulation 22' du second châssis.

La figure 3 montre par exemple un axe 65 du premier châssis 6 situé en partie haute, sur lequel peut être montée l'extrémité du bras supérieur 2.

Le montage et la translation du second châssis par rapport au premier châssis vont maintenant être détaillés.

Selon un premier mode de réalisation décrit sur les figures 2 et 3, le second châssis 8 comporte deux bras 81a, 81b qui s'étendent dans le plan vertical P. Ces deux bras sont reliés, sensiblement en leur milieu, par un corps 84 s'étendant transversalement dans le plan vertical P.

L'extrémité inférieure de chacun des bras 81a, 81b est montée coulissante, moyennant par exemple un perçage réalisé dans ladite extrémité, sur les axes 60a, 60b fixes et ménagés sur le premier châssis 6. Ces axes sont coaxiaux entre eux et s'étendent transversalement dans le plan vertical P.

De même, l'extrémité supérieure de chacun des bras 81a, 81b est également montée coulissante, moyennant par exemple un perçage réalisé dans ladite extrémité, sur un axe 60'a, 60'b fixe ménagé sur le premier châssis 6. Ces axes sont coaxiaux entre eux et s'étendent transversalement dans le plan vertical P.

Les moyens 82a, 82b pour actionner la translation du second châssis par rapport au premier châssis sont deux vérins à simple effet montés sur le premier châssis et de part et d'autre du corps 84 du second châssis.

Selon une variante non représentée, ces moyens d'actionnement pourraient aussi consister en un seul vérin à double effet monté sur le premier châssis.

Dans le premier mode de réalisation décrit sur les figures 2 et 3, le système pour accrocher l'outil agricole comprend deux accroches 41, 42 qui sont fixées au niveau de la partie inférieure du second châssis, de part et d'autre du plan médian.

Ces accroches sont montées sur des pattes 41', 42' qui s'étendent depuis l'extrémité inférieure des bras 81a, 81b du second châssis suivant la direction opposée à la direction de progression de l'attelage, c'est-à-dire vers l'arrière. Ces accroches peuvent être des crochets, des linguets, ou toute autre pièce de fixation.

Les pattes 41', 42' prolongées par les accroches 41, 42 sont montées suivant une liaison pivot autour de l'axe vertical 10 au niveau de la partie inférieure du second châssis. Ainsi, lorsque le second châssis effectue une translation par rapport au premier châssis, le pivotement autorisé par le mouvement libre des accroches permet que la translation s'effectue sans induire de contrainte qui viendrait perturber la trajectoire de l'engin agricole et sans imposer des contraintes latérales excessives à l'outil agricole. Ce dernier s'auto-équilibre en continu lors du mouvement de déport du second châssis et se repositionne sur la trajectoire souhaitée sans que des contraintes mécaniques ne perturbent la progression de l'engin agricole. La convergence permise entre les directions portées par les accroches entraîne une légère rotation de l'outil agricole qui facilité son mouvement de déport et qui le stabilise dans sa trajectoire naturelle.

L'angle de pivotement permis autour de l'axe vertical 10 est globalement compris entre compris entre 0 et +/- 30°, et préférentiellement entre 0 et +/- 8°.

Avantageusement et selon le mode de réalisation décrit sur les figures 2 et 3, le pivotement autour de l'axe vertical 10 des accroches 41, 42 est contrôlé au moyen de deux vérins 83a, 83b, chacun desdits vérins étant associés respectivement à l'une des accroches 41, 42. Cette configuration contribue à maintenir la distance entre les accroches 41, 42 facilitant ainsi un couplage rigide de l'outil agricole avec le second châssis.

Selon une autre variante, le pivotement autour de l'axe vertical 10 des accroches 41, 42 pourrait être contrôlé au moyen d'un seul vérin associé dès lors à une seule accroche 41 ou 42. Dans cette configuration, le pivotement de l'accroche contrôlé par le vérin entraîne le pivotement de l'autre accroche au travers de la déviation du cadre de l'outil agricole lui-même.

Le contrôle du pivotement des accroches 41, 42 au moyen d'un ou deux vérins permet ainsi de remettre l'outil agricole dans l'axe de la direction de progression. En effet, lorsque le relevage de l'outil est requis, il est nécessaire de replacer l'ensemble de l'attelage dans l'axe de la direction de progression et d'empêcher son pivotement et par voie de conséquence des déplacements latéraux aléatoires.

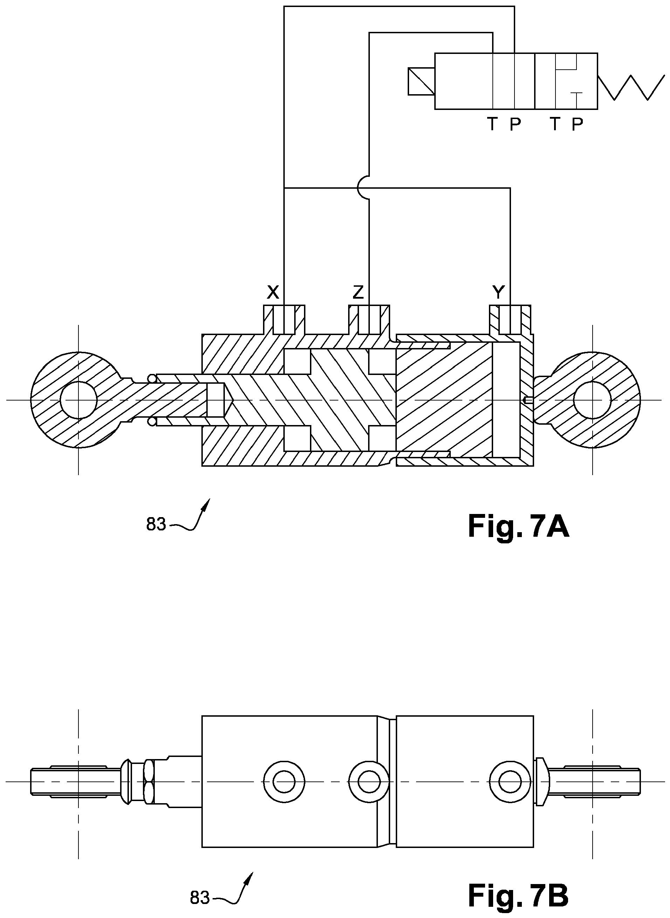

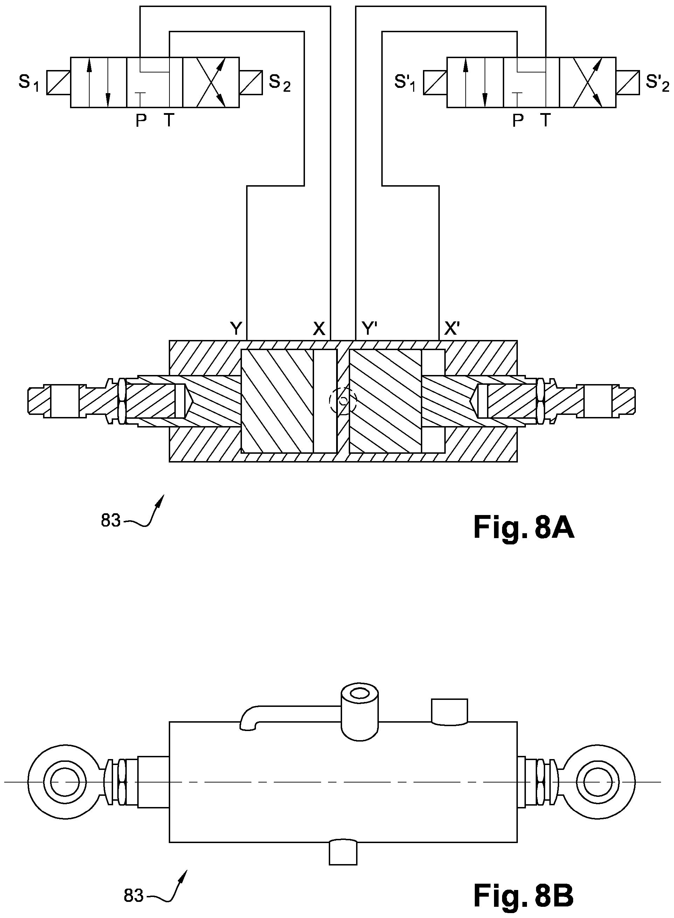

A titre d'exemple, les figures 7A, 7B, 8A et 8B représentent des exemples de mise en œuvre d'un vérin pour le contrôle du pivotement des accroches 41 et 42.

Les figures 7A et 7B décrivent une vue suivant une coupe longitudinale pour la première et une vue de dessus pour la seconde d'un vérin doté à chacune de ses extrémité d'une rotule et de trois entrées X, Y et Z définissant trois chambres. Selon un premier mode de fonctionnement, seules les entrées X et Y sont alimentées en fluide sous pression. La libre rotation des accroches est alors verrouillée. Selon un second mode de fonctionnement, aucune des entrées n'est alimentées en fluide sous pression. La translation du piston reste alors libre.

Les figures 8A et 8B décrivent une vue suivant une coupe longitudinale pour la première et une vue de dessus pour la seconde d'un double vérin doté à chacune de ses extrémité d'une rotule et deux fois deux entrées X, Y et X', Y' définissant à chaque fois deux chambres. Selon un premier mode de fonctionnement dans lequel les valves S1 et S1' sont activées, seules les entrées X et X' sont alimentées en fluide sous pression. La libre rotation des accroches est alors verrouillée. Selon un second mode de fonctionnement dans lequel les valves sont au neutre, aucune des entrées n'est alimentée en fluide sous pression. La translation du piston reste alors libre. Ce double vérin permet en outre un troisième mode de fonctionnement dans lequel lorsque les valves S2 et S1' sont activées, le vérin actionne un mouvement vers la droite. Un quatrième mode correspondant à l'actionnement d'un mouvement vers la gauche est possible lorsque les valves S1 et S2' sont activées.

Avantageusement et de manière à permettre à l'outil de trouver naturellement son point d'équilibre de traction, les pattes 41', 42' que prolongent les accroches 41, 42 situées au niveau de la partie inférieure du second châssis peuvent aussi pivoter suivant la direction transversal, c'est-à-dire autour de l'axe transversal.

Avantageusement, les accroches 41, 42 situées au niveau de la partie inférieure du second châssis sont retenues par des chandelles 80a, 80b.

Avantageusement, une accroche 40 supplémentaire et situé au niveau de la partie supérieure du second châssis, peut être ajoutée afin de retenir l'outil lors du relevage afin que ledit outil puisse être soulevé intégralement.

De manière à suivre les mouvements de balancier de l'outil agricole (ces mouvements s'inscrivant dans le plan horizontal), l'accroche 40 située au niveau de la partie supérieure du second châssis peut aussi pivoter autour de l'axe vertical 10. Pour ce faire, l'accroche 40 peut être fixée au niveau de la partie supérieure du second châssis et de l'outil agricole au moyen d'une liaison rotule par exemple.

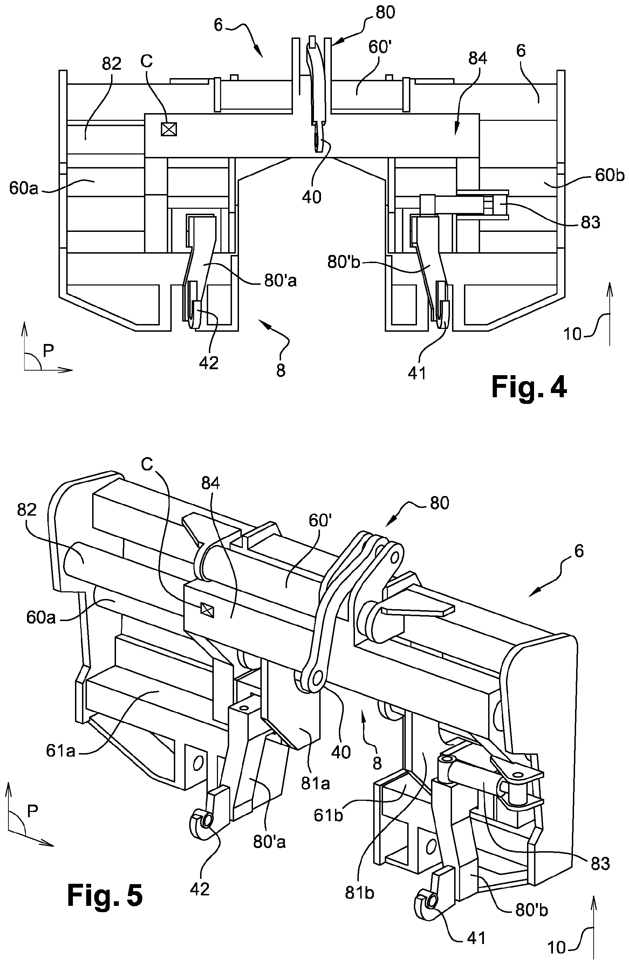

Selon un second mode de réalisation décrit sur les figures 4 et 5, le second châssis 8 comporte deux bras 81a, 81b s'étendant dans le plan vertical P. Ces deux bras sont reliés en leur extrémité supérieure par un corps 84, prolongé par un élément de retenue 80 monté coulissant le long d'un axe 60' ménagé sur le premier châssis. Chacune des extrémités inférieures des deux bras 81a, 81b est montée coulissante, moyennant par exemple un perçage réalisé dans ladite extrémité, sur un axe 60a, 60b fixe et ménagé sur le premier châssis 6, ledit axe s'étendant transversalement dans le plan vertical P.

Les moyens 82 pour actionner la translation du second châssis par rapport au premier châssis consistent en un seul vérin à double effet monté sur le premier châssis.

Selon une variante, ces moyens d'actionnement pourraient aussi consister en deux vérins à simple effet montés sur le premier châssis et de part et d'autre du corps 84 du second châssis.

Dans le second mode de réalisation décrit sur les figures 4 et 5, le système pour accrocher l'outil agricole comprend tout comme pour le premier mode, deux accroches 41, 42 qui sont fixées au niveau de la partie inférieure du second châssis, de part et d'autre du plan médian.

Ces accroches sont fixées à des pattes 80'a, 80'b qui s'étendent depuis l'extrémité inférieure des bras 81a, 81b du second châssis. Ces accroches peuvent être des crochets, des linguets, ou toute autre pièce de fixation.

Les pattes 80'a, 80'b sont montées suivant une liaison pivot autour de l'axe vertical 10 au niveau de la partie inférieure du second châssis. Ainsi, lorsque le second châssis effectue une translation par rapport au premier châssis, le pivotement autorisé par le mouvement libre des accroches permet que la translation s'effectue sans induire de contrainte qui viendrait perturber la trajectoire de l'engin agricole et sans imposer des contraintes latérales excessives à l'outil agricole. Ce dernier s'auto-équilibre en continu lors du mouvement de déport du second châssis et se repositionne sur la trajectoire souhaitée sans que des contraintes mécaniques ne perturbent la progression de l'engin agricole. La convergence permise entre les directions portées par les accroches entraîne une légère rotation de l'outil agricole qui facilité son mouvement de déport et qui le stabilise dans sa trajectoire naturelle.

L'angle de pivotement permis autour de l'axe vertical 10 est globalement compris entre compris entre 0 et +/- 30°, et préférentiellement entre 0 et +/- 8°.

Avantageusement et selon le mode de réalisation décrit sur les figures 2 et 3, le pivotement autour de l'axe vertical 10 des accroches 41, 42 est contrôlé au moyen d'un vérin 83 associé l'une des accroches 41. Dans cette configuration, le pivotement de l'accroche contrôlé par le vérin entraîne le pivotement de l'autre accroche au travers de la déviation du cadre de l'outil agricole lui-même. Cette configuration contribue à maintenir la distance entre les accroches 41, 42 facilitant ainsi un couplage rigide de l'outil agricole avec le second châssis.

Selon une autre variante, le pivotement autour de l'axe vertical 10 des accroches 41, 42 pourrait être contrôlé au moyen de deux vérins associés chacun à l'une des accroches 41, 42.

Le contrôle du pivotement des accroches 41, 42 au moyen d'un ou deux vérins permet ainsi de remettre l'outil agricole dans l'axe de la direction de progression. En effet, lorsque le relevage de l'outil est requis, il est nécessaire de replacer l'ensemble de l'attelage dans l'axe de la direction de progression et d'empêcher son pivotement et par voie de conséquence des déplacements latéraux aléatoires.

Pour ce qui est du contrôle du pivotement des accroches 41 et 42, la mise en œuvre des vérins représentée aux figures 7A, 7B, 8A et 8B est applicable tout comme dans le mode précédent.

Avantageusement, une accroche 40 supplémentaire et montée de manière pivotante sur l'élément de retenue, est prévue afin de retenir l'outil lors du relevage et pour que ledit outil puisse être soulevé intégralement.

De manière à suivre les mouvements de balancier de l'outil agricole (ces mouvements s'inscrivant dans le plan horizontal), l'accroche 40 située au niveau de la partie supérieure du second châssis peut aussi pivoter autour de l'axe vertical 10. Pour ce faire, l'accroche 40 peut être fixée au niveau de la partie supérieure du second châssis et de l'outil agricole au moyen d'une liaison rotule par exemple.

Dans le premier mode de réalisation comme dans le second mode de réalisation, et afin de contrôler précisément la translation du second châssis par rapport au premier châssis, le second châssis comporte avantageusement un capteur de feedback C qui permet d'ajuster la translation du second châssis et de corriger les déviations par rapport à la position de consigne.

Avantageusement et tel que représenté dans le premier mode de réalisation comme dans le second mode de réalisation, le passage pour les câbles d'alimentation des moyens d'actionnement 82, 82a, 82b qui permet la translation du second châssis par rapport au premier châssis, s'effectue à travers l'espace libre défini entre les deux bras du second châssis.

Cet espace libre peut aussi avantageusement servir au passage pour la ligne de transmission mécanique entrainant l'outil agricole et servir accessoirement au passage des câbles hydrauliques et/ou électriques.

Ainsi, les deux modes de réalisation illustrent le principe de l'invention qui est précisément de déplacer le second châssis par rapport au premier châssis pour repositionner l'outil agricole par rapport à la trajectoire définie par le système GPS. La liberté de pivotement des accroches permet la transition de l'outil agricole lors de son repositionnement et lui permet d'avancer sans créer de contrainte latérale anormale dans les structures d'attelage et de l'outil.

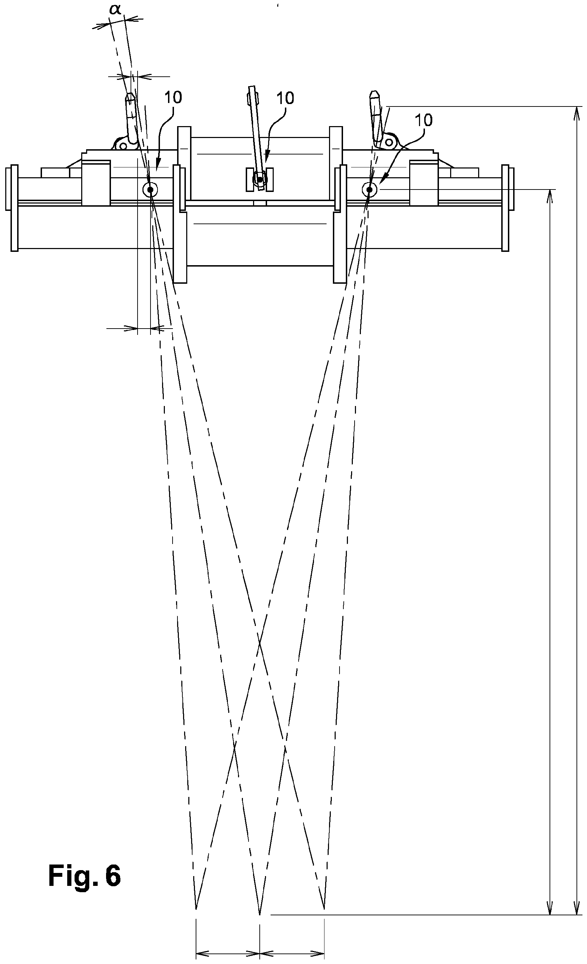

La figure 6 illustre que le point de traction se déplace latéralement, lorsque les accroches pivotent. Cet angle correspond à l'écart de l'outil agricole par rapport à la ligne de traction ou bien lorsque le second châssis est en translation par rapport au premier châssis. Cela revient donc à tracter l'outil avec un angle de traction facilitant son recentrage.

Cette dissociation entre l'outil agricole et le tracteur permet que l'outil se recentre sur sa ligne de force d'équilibre et de traction sans imposer de contrainte de rigidité nuisant à la capacité du tracteur à maintenir sa trajectoire, y compris dans les courbes ou les pentes.

De plus cette disposition évite de transmettre à l'engin agricole les impulsions latérales liées aux asymétries de relief ou d'effort de traction.

La figure 6 décrit aussi la géométrie de l'attelage tel que préconisé par la norme ISO 730.

Ainsi, le dispositif d'attelage selon l'invention représente une chaîne mécanique naturellement stable et facile à contrôler. Il est de plus compatible avec la ligne de transmission de l'outil agricole et permet de travailler avec des outils à fort tirage ou bien équipés de disques comme éléments de travail.

Il permet en outre de se connecter à l'engin agricole suivant les trois points d'attelage usuels, et donc sans modification des composants de l'engin agricole.

Bien sûr, l'invention n'est pas limitée aux exemples qui viennent d'être décrits et de nombreux aménagements peuvent être apportés à ces exemples sans sortir du cadre des revendications.

## Revendications

1. Dispositif d'attelage d'un outil, propre à être monté sur un engin agricole (1), comportant :
- un premier châssis (6) s'étendant suivant un plan (P) vertical, dont la normale est sensiblement la direction de progression de l'attelage,
- un second châssis (8) s'étendant également suivant le plan (P) vertical et monté en translation sur le premier châssis suivant la direction transversale définie par rapport à la direction de progression de l'attelage,
- des moyens d'actionnement (82, 82a, 82b) de la translation du second châssis par rapport au premier châssis,
- un dispositif de fixation du premier châssis à l'arrière de l'engin agricole,
- un système pour accrocher un outil agricole au second châssis, **caractérisé en ce que** ledit système est apte à pivoter librement autour d'un axe vertical (10), par rapport au second châssis.

2. Dispositif d'attelage d'un outil, selon la revendication 1, **caractérisé en ce que** le dispositif d'accroche comprend deux accroches (41, 42) disposées au niveau de la partie inférieure du second châssis, symétriquement par rapport au plan médian vertical, lesdites accroches s'étendant selon le sens opposé à la direction de progression de l'attelage.

3. Dispositif d'attelage d'un outil, selon la revendication 2, **caractérisé en ce que** les accroches (41, 42) situées au niveau de la partie inférieure du second châssis sont également pivotantes autour d'un axe du second châssis s'étendant transversalement, et retenues aux moyens de chandelles (80a, 80b).

4. Dispositif d'attelage d'un outil, selon la revendication 3, **caractérisé en ce que** l'angle alpha de pivotement des deux accroches (41, 42) autour de l'axe vertical (10) est compris entre 0 et +/- 30°, et préférentiellement entre 0 et +/- 8°.

5. Dispositif d'attelage d'un outil, selon la revendication 3 ou 4, **caractérisé en ce que** le pivotement des accroches autour de l'axe vertical (10) est contrôlé par au moins un vérin (83, 83a, 83b), ledit au moins vérin étant apte à travailler selon un premier mode correspondant à la libre rotation des accroches (41, 42) autour de la verticale et un second mode dans lequel la rotation des accroches (41, 42) autour de l'axe vertical est verrouillée.

6. Dispositif d'attelage d'un outil, selon l'une quelconque des revendications précédentes, **caractérisé en ce que** le dispositif d'accroche comprend en outre une troisième accroche (40) située au niveau de la partie supérieure du second châssis, ladite accroche constituant un élément de retenue de l'outil agricole.

7. Dispositif d'attelage d'un outil, selon l'une quelconque des revendications précédentes, **caractérisé en ce que** le dispositif de fixation du premier châssis à l'arrière de l'engin agricole est un système de relevage L à trois points comportant en partie basse, deux bras (7a, 7b) articulés et aptes à être montés en l'une de leurs extrémités sur un axe de l'engin agricole et en l'autre de leurs extrémités sur le premier châssis, et en partie haute un élément apte à former une liaison (2) entre la partie supérieure du premier châssis et l'engin agricole, les bras (7a, 7b) étant commandés par des moyens de relevage (3a, 3b).

8. Dispositif d'attelage d'un outil, selon l'une quelconque des revendications précédentes, **caractérisé en ce que** le second châssis comporte deux bras (81a, 81b) s'étendant verticalement et reliés en leur extrémité supérieure par un corps (84), leur extrémité inférieure étant chacune montée coulissante le long d'une paire d'axes coaxiaux (60a, 60b) ménagée sur le premier châssis et s'étendant dans le plan vertical suivant la direction transversale, tandis que le corps (84) du second châssis est prolongé par un élément de retenue (80) monté coulissant le long d'un axe (60') ménagé sur le premier châssis et s'étendant également dans le plan vertical suivant la direction transversale.

9. Dispositif d'attelage d'un outil, selon l'une quelconque des revendications 1 à 7, **caractérisé en ce que** le second châssis comporte deux bras (81a, 81b) s'étendant verticalement et reliés sensiblement en leur milieu par un corps (84), leurs extrémités inférieure et supérieure étant respectivement chacune montées coulissantes le long d'une paire d'axes coaxiaux (60a, 60b, 60'a, 60'b) ménagée sur le premier châssis et s'étendant dans le plan vertical suivant la direction transversale.

10. Dispositif d'attelage d'un outil, selon l'une quelconque des revendications précédentes, **caractérisé en ce que** les moyens d'actionnement (82, 82a, 82b) de la translation du second châssis par rapport au premier châssis comprennent deux vérins à simple effet montés de part et d'autre du corps du second châssis.

11. Dispositif d'attelage d'un outil, selon l'une quelconque des revendications 1 à 10, **caractérisé en ce que** les moyens d'actionnement (82, 82a, 82b) de la translation du second châssis par rapport au premier châssis comprennent un vérin à double effet monté d'un côté du second châssis.

12. Dispositif d'attelage d'un outil, selon l'une quelconque des revendications 8 à 11, **caractérisé en ce que** l'espace libre entre les deux bras du second châssis définit un passage pour les câbles d'alimentation des moyens d'actionnement (82, 82a, 82b) de la translation du second châssis par rapport au premier châssis, ainsi que pour la ligne de transmission mécanique entrainant l'outil agricole.

13. Dispositif d'attelage d'un outil, selon l'une quelconque des revendications précédentes, **caractérisé en ce qu'**il comprend un capteur C pour identifier la position du second châssis par rapport au premier châssis.

## Patentansprüche

1. Vorrichtung zum Koppeln eines Werkzeugs, das zur Montage an einer landwirtschaftlichen Maschine (1) geeignet ist, mit:
- einem ersten Rahmen (6), der sich entlang einer vertikalen Ebene (P) erstreckt, deren Normale im Wesentlichen die Kopplungsbewegungsrichtung ist,
- einem zweiten Rahmen (8), der sich ebenfalls entlang der vertikalen Ebene (P) erstreckt und in der in Bezug auf die Kopplungsbewegungsrichtung definierten Querrichtung verschiebbar auf dem ersten Rahmen montiert ist,
- Betätigungseinrichtungen (82, 82a, 82b) zum Verschieben des zweiten Rahmens in Bezug auf den ersten Rahmen,
- einer Vorrichtung zum Befestigen des ersten Rahmens an der Rückseite der landwirtschaftlichen Maschine,
- einem System zum Anhängen eines landwirtschaftlichen Werkzeugs an den zweiten Rahmen,
**dadurch gekennzeichnet, dass** sich das System in Bezug auf den zweiten Rahmen frei um eine vertikale Achse (10) drehen kann.

2. Kopplungsvorrichtung für ein Werkzeug nach Anspruch 1, **dadurch gekennzeichnet, dass** die Anhängevorrichtung zwei Haken (41, 42) aufweist, die auf der Höhe des unteren Teils des zweiten Rahmens symmetrisch in Bezug auf die vertikale Mittelebene angeordnet sind, wobei die Haken sich in zu der Kopplungsbewegungsrichtung entgegengesetzter Richtung erstrecken.

3. Kopplungsvorrichtung für ein Werkzeug nach Anspruch 2, **dadurch gekennzeichnet, dass** die auf der Höhe des unteren Teils des zweiten Rahmens angeordneten Haken (41, 42) ebenfalls um eine querverlaufende Achse des zweiten Rahmens schwenkbar und mittels Hubstangen (80a, 80b) gehalten sind.

4. Kopplungsvorrichtung für ein Werkzeug nach Anspruch 3, **dadurch gekennzeichnet, dass** der Schwenkwinkel alpha der beiden Haken (41, 42) um die vertikale Achse (10) zwischen 0 und +/- 30 ° und vorzugsweise zwischen 0 und +/- 8 ° beträgt.

5. Kopplungsvorrichtung für ein Werkzeug nach Anspruch 3 oder 4, **dadurch gekennzeichnet, dass** das Schwenken der Haken um die vertikale Achse (10) durch mindestens einen Zylinder (83, 83a, 83b) gesteuert ist, wobei der mindestens eine Zylinder geeignet ist, in einem ersten Modus, welcher dem freien Drehen der Haken (41, 42) um die Vertikale entspricht, und einen zweiten Modus zu arbeiten, in welchem das Drehen der Haken (41, 42) um die vertikale Achse gesperrt ist.

6. Kopplungsvorrichtung für ein Werkzeug nach einem der vorangehenden Ansprüche, **dadurch gekennzeichnet, dass** die Hakenvorrichtung ferner einen dritten Haken (40) aufweist, der auf der Höhe des oberen Teils des zweiten Rahmens angeordnet ist, wobei der Haken ein Halteelement für das landwirtschaftliche Werkzeug bildet.

7. Kopplungsvorrichtung für ein Werkzeug nach einem der vorangehenden Ansprüche, **dadurch gekennzeichnet, dass** die Einrichtung zur Befestigung des ersten Rahmens an der Rückseite der landwirtschaftlichen Maschine ein Dreipunkt-Hubsystem L ist, das am unteren Teil zwei Gelenkarme (7a, 7b) aufweist, die an einem ihrer Enden an einer Achse der landwirtschaftlichen Maschine und an dem anderen ihrer Enden an dem ersten Rahmen anbringbar sind, und am oberen Teil ein Element (2) aufweist, das geeignet ist, eine Verbindung (2) zwischen dem Oberteil des ersten Rahmens und der landwirtschaftlichen Maschine zu bilden, wobei die Arme (7a, 7b) durch Hebeeinrichtungen (3a, 3b) gesteuert sind.

8. Kopplungsvorrichtung für ein Werkzeug nach einem der vorhergehenden Ansprüche, **dadurch gekennzeichnet, dass** der zweite Rahmen zwei Arme (81a, 81b) aufweist, die sich vertikal erstrecken und an ihrem oberen Ende durch einen Körper (84) verbunden sind, wobei ihr unteres Ende jeweils gleitend entlang zweier koaxialer Achsen (60a, 60b) angebracht ist, welche an dem ersten Rahmen ausgebildet sind und sich in der vertikalen Ebene in Querrichtung erstrecken, während der Körper (84) des zweiten Rahmens durch ein Halteelement (80) verlängert ist, das entlang einer Achse (60'), die an dem ersten Rahmen ausgebildet ist und sich ebenfalls in der vertikalen Ebene in Querrichtung erstreckt, gleitend bewegbar angebracht ist.

9. Kopplungsvorrichtung für ein Werkzeug nach einem der Ansprüche 1 bis 7, **dadurch gekennzeichnet, dass** der zweite Rahmen zwei Arme (81a, 81b) aufweist, die sich vertikal erstrecken und im Wesentlichen in ihrer Mitte durch einen Körper (84) verbunden sind, wobei ihre unteren und oberen Enden jeweils entlang zweier koaxialer Achsen (60a, 60b, 60'a, 60'b), welche an dem ersten Rahmen ausgebildet sind und sich in der vertikalen Ebene in Querrichtung erstrecken, gleitend bewegbar angebracht sind.

10. Kopplungsvorrichtung für ein Werkzeug nach einem der vorangehenden Ansprüche, **dadurch gekennzeichnet, dass** die Betätigungseinrichtungen (82, 82a, 82b) zum Verschieben des zweiten Rahmens in Bezug zu dem ersten Rahmen zwei einfach wirkende Zylinder aufweisen, die zu beiden Seiten des Körpers des zweiten Rahmens angebracht sind.

11. Kopplungsvorrichtung für ein Werkzeug nach einem der Ansprüche 1 bis 10, **dadurch gekennzeichnet, dass** die Betätigungseinrichtungen (82, 82a, 82b) zum Verschieben des zweiten Rahmens in Bezug zu dem ersten Rahmen einen doppelt wirkenden Zylinder aufweisen, der auf einer Seite des zweiten Rahmens angebracht ist.

12. Kopplungsvorrichtung für ein Werkzeug nach einem der Ansprüche 8 bis 11, **dadurch gekennzeichnet, dass** der Freiraum zwischen den beiden Armen des zweiten Rahmens einen Durchgang für die Stromversorgungskabel der Betätigungseinrichtungen (82, 82a, 82b) zum Verschieben des zweiten Rahmens in Bezug zu dem ersten Rahmen sowie für die mechanische Übertragungsleitung, die das landwirtschaftliche Werkzeug antreibt, bildet.

13. Kopplungsvorrichtung für ein Werkzeug nach einem der vorangehenden Ansprüche, **dadurch gekennzeichnet, dass** sie einen Sensor C zum Erkennen der Position des zweiten Rahmens in Bezug zu dem ersten Rahmen aufweist.

## Claims

1. A hitch device for an implement, suitable for being mounted on an agricultural vehicle (1), comprising:
- a first chassis (6) extending in a vertical plane (P), the normal of which is substantially the travel direction of the hitch,
- a second chassis (8) also extending in the vertical plane (P) and translatably mounted on the first chassis along the transverse direction defined with respect to the travel direction of the hitch,
- means (82, 82a, 82b) for actuating the translation of the second chassis with respect to the first chassis,
- a device for fixing the first chassis at the rear of the agricultural vehicle,
- a system for hooking up an agricultural implement to the second chassis,
**characterised in that** said system is able to swivel freely around a vertical axis (10), with respect to the second chassis.

2. The hitch device for an implement according to claim 1, **characterised in that** the hooking up device comprises two hooking elements (41, 42) disposed at the lower part of the second chassis, symmetrically with respect to the vertical median plane, said hooking elements extending along the opposite direction to the travel direction of the hitch.

3. The hitch device for an implement according to claim 2, **characterised in that** the hooking elements (41, 42) located at the lower part of the second chassis are also swivelling around an axis of the second chassis extending transversally, and retained by means of levelling rods (80a, 80b).

4. The hitch device for an implement according to claim 3, **characterised in that** the swivelling alpha angle of both hooking elements (41, 42) around the vertical axis (10) is between 0 and +/- 30°, and preferably between 0 and +/- 8°.

5. The hitch device for an implement according to claim 3 or 4, **characterised in that** the swivelling of the hooking elements around the vertical axis (10) is controlled by at least one jack (83, 83a, 83b), said at least one jack being able to work according to a first mode corresponding to the free rotation of the hooking elements (41, 42) around the vertical and a second mode in which the rotation of the hooking elements (41, 42) around the vertical axis is locked.

6. The hitch device for an implement according to any of the previous claims, **characterised in that** the hooking up device further comprises a third hooking element (40) located at the upper part of the second chassis, said hooking element acting as a retaining element for the agricultural implement.

7. The hitch device for an implement according to any of the previous claims, **characterised in that** the device for fixing the first chassis at the rear of the agricultural vehicle is a three-point lifting system L including at the bottom part, two hinged arms (7a, 7b) intended to be mounted at one of their ends on an axis of the agricultural vehicle and at the other of their ends on the first chassis, and at the top part an element (2) adapted to form a link between the upper part of the first chassis and the agricultural vehicle, the arms (7a, 7b) being controlled by lifting means (3a, 3b).

8. The hitch device for an implement according to any of the previous claims, **characterised in that** the second chassis includes two arms (81a, 81b) extending vertically and connected at their upper end by a body (84), their lower end being each slidably mounted along a pair of coaxial axes (60a, 60b) provided on the first chassis and extending in the vertical plane along the transverse direction, whereas the body (84) of the second chassis is extended by a retaining element (80) slidably mounted along an axis (60') provided on the first chassis and also extending in the vertical plane along the transverse direction.

9. The hitch device for an implement according to any of claims 1 to 7, **characterised in that** the second chassis includes two arms (81a, 81b) extending vertically and substantially connected at their middle part by a body (84), their lower and upper ends being each respectively slidably mounted along a pair of coaxial axes (60a, 60b, 60'a, 60'b) provided on the first chassis and extending in the vertical plane along the transverse direction.

10. The hitch device for an implement according to any of the previous claims, **characterised in that** the means (82, 82a, 82b) for actuating the translation of the second chassis with respect to the first chassis comprise two single-acting jacks mounted on either side of the body of the second chassis.

11. The hitch device for an implement according to any of claims 1 to 9, **characterised in that** the means (82, 82a, 82b) for actuating the translation of the second chassis with respect to the first chassis comprise a double-acting jack mounted on one side of the second chassis.

12. The hitch device for an implement according to any of claims 8 to 11, **characterised in that** the free space between both arms of the second chassis defines a passage for the power cables of the means (82, 82a, 82b) for actuating the translation of the second chassis with respect to the first chassis, as well as for the mechanical drive line driving the agricultural implement.

13. The hitch device for an implement according to any of the previous claims, **characterised in that** it comprises a sensor C to identify the position of the second chassis with respect to the first chassis.
